(19) Europäisches Patentamt
European Patent Office
Office européen des brevets

(11) **EP 2 790 125 B1**

(12) **EUROPEAN PATENT SPECIFICATION**

(45) Date of publication and mention
of the grant of the patent:
**03.06.2015 Bulletin 2015/23**

(51) Int Cl.:
**G06K 7/14** *(2006.01)*    **G06K 7/10** *(2006.01)*

(21) Application number: **13290081.2**

(22) Date of filing: **10.04.2013**

(54) **Method and apparatus for decoding a non-planar barcode**

Verfahren und Vorrichtung zur Decodierung eines nichtplanaren Strichcodes

Procédé et appareil de décodage d'un code à barres non plan

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.10.2014 Bulletin 2014/42**

(73) Proprietor: **ALCATEL LUCENT**
**92100 Boulogne-Billancourt (FR)**

(72) Inventors:
• **Templ, Wolfgang**
**74372 Sersheim (DE)**
• **Weigmann, Walter**
**90765 Fürth (DE)**

(74) Representative: **Wetzel, Emmanuelle**
**Alcatel Lucent**
**Intellectual Property & Standards**
**70430 Stuttgart (DE)**

(56) References cited:
**US-A1- 2005 150 957    US-B1- 8 413 903**

**Description**

The invention relates to a barcode scanning device for decoding a one-dimensional non-planar barcode, a method for decoding a one-dimensional non-planar barcode with a barcode scanning device and a software module for carrying out the method.

BACKGROUND ART

In a one-dimensional barcode, information is coded by consecutively arranging bars (usually black) and spaces (usually white) of different widths in parallel along a direction of alignment. The widths of the bars and spaces are integer multiples of a given smallest width, also known as the x-dimension.

For decoding one-dimensional barcodes, barcode scanners are widely used that employ either a reciprocating mirror or a rotating prism to scan a laser beam back and forth across the one-dimensional barcode. At checkout counters of supermarkets, stationary barcode scanners are common. Depending on the type of goods, some retailers preferred handheld barcode scanners based on the same working principle.

When a barcode label is attached to a non-planar, for instance round object, the roundness of the object is transferred to the barcode label, with the effect that the given smallest width seems to be decreased for the barcode scanner. Reading and decoding of the barcodes with the barcode scanner then often becomes difficult, resulting in multiple unsuccessful scanning or reading attempts, for instance by market cashier personnel. In many cases, even a manual data input by the cashier personnel may become necessary. As a result, a turnover is reduced and customers may get annoyed.

It is therefore desirable to provide a barcode scanning device with an improved performance with regard to decoding non-planar barcodes without employing complex image processing methods.

DESCRIPTION

In one aspect of the present invention, a barcode scanning device is provided for decoding a one-dimensional non-planar barcode having a plurality of barcode elements that are adjacently arranged to form a pattern and that each have a width which is an integer multiple of a given smallest width, and wherein at least two of the barcode elements are arranged separated by a distance of the given smallest width, the barcode scanning device comprising:

> a barcode scanner configured for generating a time-dependent signal corresponding to the pattern of the barcode by scanning the barcode; and
> a correcting unit that is configured
> for determining from the time-dependent signal at least one geometrical parameter each characterizing relative positions of adjacent barcode elements as if projected onto a virtual plane that is arranged between the barcode scanner and the non-planar barcode;
> for determining a radius of curvature of a virtual cylinder which approximates a surface that the non-planar barcode is attached to from the determined geometrical parameters between adjacent barcode elements by finding a radius of curvature for which a variance of differences of the determined geometrical parameters between adjacently arranged barcode elements to integer multiples of a smallest variation of the geometrical parameter is at least close to a minimum; and
> for correcting the determined geometrical parameters by a correction factor corresponding to the smallest variation of the geometrical parameter and obtained by using the determined radius of curvature and a portion of the time-dependent signal.

The phrase "barcode elements", as used in this application, shall be understood particularly as bars (usually black) and spaces (usually white), whose widths are determined by multiplying the given smallest width within an integer number which is usually called the module width of each barcode element. Two or more adjacently arranged bars appear as a single bar having a width that is the sum of the module widths of the bars. The same way, adjacently arranged spaces appear as a single space. Examples of widely-used barcodes are the Universal Product Code (UPC-A) and the European Article Number (EAN). Both barcodes comprise a start and an end section, each of which consists of two bars and a space arranged in between. The two bars as well as the space are one module width wide.

The phrase "non-planar barcode", as used in this application, shall be understood particularly as a barcode which comprises barcode elements that do not lie in a single plane, which in turn is understood to be a flat, two-dimensional surface. The non-planar barcodes may be printed on a barcode label that may be attached to an object, but it could as well be printed on a surface of the object itself.

The phrase "barcode scanner", as used in this application, shall be understood particularly as a scanning device having a light source and means to illuminate the barcode with light from the light source, and a light-sensitive element to measure the intensity of light reflected from the barcode. In other words, the phrase "barcode scanner" is particularly understood to be used in this application as distinguished from imaging scanners (like the ones commonly used in today's smartphone scanning apps) employing image processing methods.

The phrase "cylinder to approximate a surface", as used in this application, shall be understood particularly such that the cylinder has a radius that is identical to a radius of curvature in a section plane at a point that is common to both the cylinder and the surface.

The phrase "corresponding", as used in this application, shall be understood particularly as "related to", "caused by" or "derived from".

One advantage of the barcode scanning device lies in that non-planar barcodes can reliably be decoded as well as planar barcodes. A barcode scanning device with an improved performance for decoding non-planar barcodes can be provided such that a number of attempts to decode a non-planar barcode can at least be substantially reduced.

Another advantage of the barcode scanning device lies in the fact that complex image processing methods can be avoided, so that a cost-effective solution can be provided.

In a further preferred embodiment, the determined geometrical parameters are distances along a straight line. By that, distances between adjacent barcode element positions can easily be compared with a distance determined for the given smallest width in the same way. The straight line may lie in the virtual plane.

In another preferred embodiment, the determined geometrical parameters are viewing angles at which adjacent barcode elements appear when viewed from a barcode scanner position. By that, viewing angles between adjacent barcode element positions can easily be compared with a viewing angle determined for the given smallest width in the same way.

In yet another embodiment, the barcode scanning device further comprises a triangulation device that is configured for determining a relative position between the barcode scanner and the barcode. By that, the accuracy for determining the geometrical parameters characterizing relative positions of adjacent barcode elements can be improved.

In another aspect of the present invention, a method is provided for decoding a one-dimensional non-planar barcode with a barcode scanning device comprising a barcode scanner, the non-planar barcode having a plurality of barcode elements that are adjacently arranged to form a pattern and that each have a width which is an integer multiple of a given smallest width, and wherein at least two of the barcode elements are arranged separated by a distance of the given smallest width, the method comprising steps of:

- acquiring a time-dependent signal corresponding to the pattern of the barcode by scanning the barcode with the barcode scanner;
- from the time-dependent signal, determining at least one geometrical parameter each for characterizing relative positions of adjacent barcode elements as if projected onto a virtual plane that is arranged between the barcode scanner and the non-planar barcode;
- determining a radius of curvature of a virtual cylinder which approximates a surface that the non-planar barcode is attached to from the determined geometrical parameters between adjacent barcode elements by finding a radius of curvature for which a variance of differences of the determined geometrical parameters between adjacent barcode elements to integer multiples of a smallest variation of the geometrical parameter is at least close to a minimum;

using the determined radius of curvature and a portion of the time-dependent signal to obtain a correction factor corresponding to the smallest variation of the geometrical parameter for correcting the determined geometrical parameters.

One advantage of the method lies in that non-planar barcodes can reliably be decoded as well as planar barcodes, with at least a substantially reduced number of attempts for decoding non-planar barcodes. The provided method is lean and cost-effective, as it does not require any additional hardware effort.

According to a preferred embodiment, the method comprises a further step of determining a relative position between the barcode scanner and the barcode with a triangulation device. By that, the accuracy for determining the geometrical parameters characterizing relative positions of adjacent barcode elements can be improved. The triangulation device may be an integrated part of the barcode scanner.

In yet another aspect of the invention, a software module is provided to carry out one of the disclosed methods or a combination thereof, wherein the method is converted into a program code that is implementable in and executable by a correcting unit of a barcode scanning device, and that is provided to control a barcode scanning device by carrying out the method.

These and other aspects of the invention will be apparent from and elucidated with reference to the embodiments described hereinafter.

**EP 2 790 125 B1**

BRIEF DESCRIPTION OF THE DRAWINGS

In the drawings:

Fig. 1 schematically illustrates an arrangement of a one-dimensional non-planar barcode attached to an object; and
Fig. 2 schematically shows an embodiment of the barcode scanning device in a state of decoding a non-planar barcode.

DETAILED DESCRIPTION

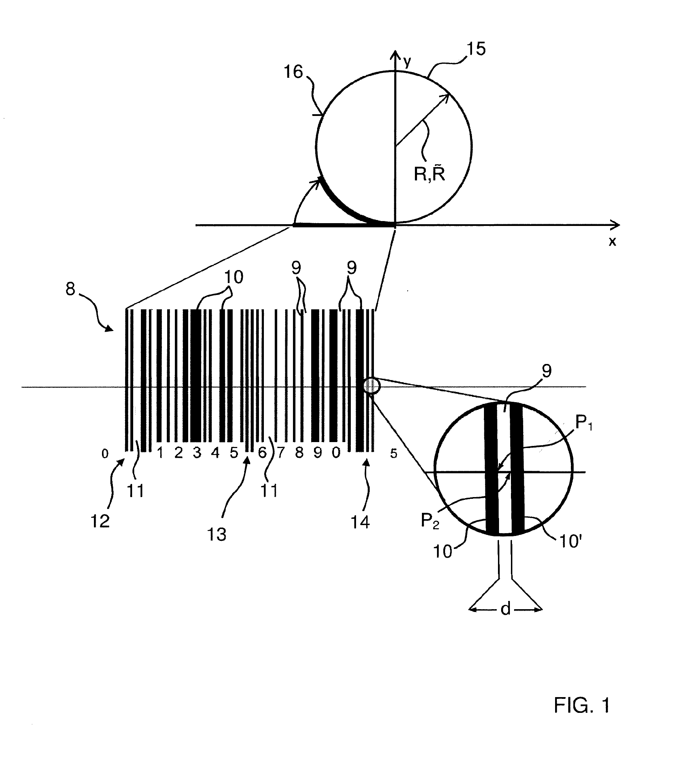

Fig. 1 schematically illustrates an arrangement of a one-dimensional (linear) barcode 8 that is attached to a non-planar surface 16 of an object 15 formed by a plastic bottle.

The one-dimensional barcode 8 is designed as a UPC-A (Universal Product Code) barcode, in which 12 digits are decoded. The UPC-A barcode comprises a plurality of barcode elements 9 that are adjacently arranged to form a pattern. Each digit is represented by a seven-bit sequence, which in turn is decoded by the widths of two bars 10 and two spaces 11, so that the 12 digits are decoded by a plurality of 48 barcode elements 9. The widths of the bars 10 and spaces 11 are integer (1, 2, 3 or 4) multiples of a given smallest width d. The integer number representing the width of a bar 10 or space 11 is also called its module width.

The UPC-A barcode has a start region 12 and an end region 14, each of which is designed as a sequence of three barcode elements 9 given by the order "bar-space-bar", wherein each barcode element 9 is one module wide, so that there are always at least two barcode elements 9 in a UPC-A barcode that are arranged separated by a distance of the given smallest width d.

Further, the UPC-A barcode has a middle region 13 designed as a sequence of five barcode elements 9 given by the order "space-bar-space-bar-space", wherein each barcode element 9 is one module wide.

The upper part of Fig. 1 schematically shows a cross-section of the plastic bottle whose cylindrical surface 16, in the sectional plane, can be described by a radius R which at the same time is a radius of curvature R of the surface 16 of the plastic bottle.

Without loss of generality, a Cartesian coordinate system is chosen to be centered at the very right edge of the barcode 8. Before bending and attaching the barcode 8 around the plastic bottle, in this coordinate system edges of the barcode elements 9 are located at positions $(0,0)$, $(-d,0)$, $(-2'd,0)$, ..., $(-n'd,0)$. Two edge points $P_1$, $P_2$ located at opposing edges of two bars 10, 10' of the end region 14, arranged adjacently to a barcode element 9 designed as a space 11, are separated by the given smallest width d, the module length.

Once the one-dimensional barcode 8 is attached to the cylindrical surface 16 of the plastic bottle, it is bent and becomes a non-planar barcode 8.

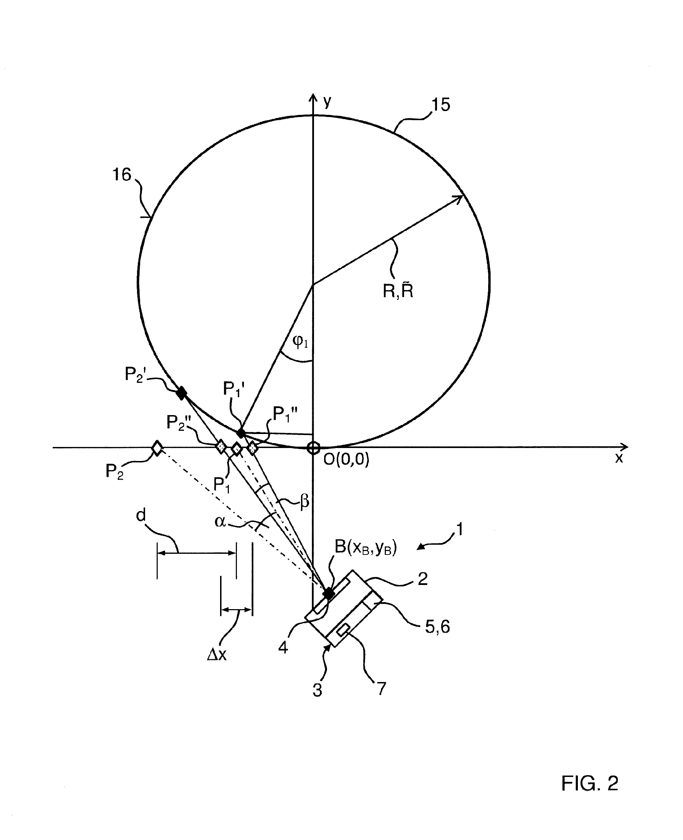

Fig. 2 schematically shows an embodiment of a barcode scanning device 1 in a state of decoding a non-planar barcode 8. The cylindrical surface 16 of the plastic bottle, the position of the Cartesian coordinate system and the barcode 8 attached to the cylindrical surface 16 of the plastic bottle are arranged as shown in Fig. 1.

The barcode scanning device 1 comprises a barcode scanner 2 which is located as indicated in Fig. 2 by position B with coordinates $(x_B, y_B)$ and which in an operational state is directed toward the barcode 8. The barcode scanner 2 is configured for generating a time-dependent signal corresponding to the pattern of the barcode 8 by scanning the barcode 8. Before the barcode 8 was attached to the object 15, the undistorted barcode 8 is oriented along the x-axis with its right edge at the coordinate system origin $(0,0)$, as indicated in Fig. 1, and the barcode scanner 2 would be able to decode the barcode 8 in the conventional way.

By bending the one-dimensional barcode 8 along the cylindrical surface 16 of the plastic bottle, the two points $P_1$, $P_2$ on the two bars 10, 10' of the end region 14 are mapped to determined positions $P_1'$ and $P_2'$ on the object surface 16.

Consequently, the barcode scanner 2 will view the two points $P_1'$ and $P_2'$ under a viewing angle $\beta$ which is different from a viewing angle $\alpha$ for $P_1$ and $P_2$, resulting in a potential decoding error. Further, the distance $\Delta x$ between the two points $P_1'$ and $P_2'$, projected onto the xz-plane that is arranged between the barcode scanner 2 and the non-planar barcode 8, is distorted in comparison to the distance d between the two points $P_1$ and $P_2$ of the planar barcode 8, and is appearing smaller.

For correction of determined geometrical parameters such as viewing angles $\alpha$, $\beta$ at which adjacent barcode elements 9 appear when viewed from the barcode scanner position, or distances $\Delta x$ along a straight line, such as the x-axis, the barcode scanning device 1 is equipped with a correcting unit 3.

$P_1''$ and $P_2''$ are the projections of $P_1'$ and $P_2'$ onto the xz-plane along a visual line $\overline{B\,P_1'}$ and a visual line $\overline{B\,P_2'}$.

An angular position of the first point $P_1''$ of the two points $P_1''$, $P_2''$ on the object surface 16 can be denoted by a center angle $\varphi_1$ (in radian), which equals

4

$$\varphi_1 = d / R \qquad \text{(eq. 1)}$$

In the Cartesian coordinate system, point $P_1$' is located at coordinates ($-R$' $\sin \varphi_1$, $R\cdot(1 - \cos \varphi_1)$)

$P_1$" with coordinates ($x_{2,1}$,0) is defined by the intersection of the visual line $\overline{BP_1}$' with the xz-plane. Corresponding points $P_n$" can be determined in the same way. The x-coordinate $x_{2,n}$ of point $P_n$" is given by

$$x_{2,n} = x_B - y_B \cdot \frac{x_B + R \cdot \sin \varphi_n}{y_B - R \cdot (1 - \cos \varphi_n)} \qquad \text{(eq. 2)}$$

with

$$\varphi_n = \frac{d \cdot n}{R} \qquad \text{(eq. 3)}$$

The distance between neighboring projected points $P_n$" and $P_{n+1}$" along a straight line given by the x-axis and defining the viewing angle, is given by

$$\Delta x_{2,n} = y_B \cdot \left( \frac{x_B + R \cdot \sin \varphi_{n+1}}{y_B - R \cdot (1 - \cos \varphi_{n+1})} - \frac{x_B + R \cdot \sin \varphi_n}{y_B - R \cdot (1 - \cos \varphi_n)} \right) \qquad \text{(eq. 4)}$$

The barcode scanning device 1 comprises a triangulation device 4 which is integrated in the barcode scanner 2, and which is provided for determining position coordinates $x_B$ and $y_B$. The triangulation device 4 is of a customary type, known from prior art, and therefore does not need to be discussed in further detail herein.

If the setup is arranged such that $y_{B>>}$ R, eq. 4 simplifies to

$$\Delta x_{2,n} = R \cdot \left( \sin \varphi_{n+1} - \sin \varphi_n \right)$$

which means that in this case the position of the barcode scanner 2 relative to the barcode 8 is not required for determining geometrical parameters characterizing relative positions of adjacent barcode elements 9.

In the following, the method of decoding the one-dimensional non-planar barcode 8 and the correction of the determined geometrical parameters are described in more detail.

In preparation of the reading and decoding of the one-dimensional non-planar barcode 8 it shall be understood that the one-dimensional barcode 8 is attached to the surface 16 of the plastic bottle, that the barcode scanner 2 and the barcode 8 are arranged as shown in Fig. 2, and that the barcode scanner 2 and the correcting unit 3 are in an operational state.

In a scanning step, the barcode scanner 2 acquires a time-dependent signal corresponding to the pattern of the barcode 8. At the same time, or shortly before or after the scanning step, the relative position between the barcode scanner 2 and the barcode 8 is determined by the builtin triangulation device 4, which provides position coordinates $x_B$ and $y_B$.

The correcting unit 3 is configured to carry out the steps described in the following. To this end, a software module 5 is provided, wherein steps of the method are converted into a program code that is implementable in a memory unit 6 and executable by a processing unit 7 of the correcting unit 3, to control the barcode scanning device 1 by carrying out the method.

In a following step, the correcting unit 3 is configured for determining from the acquired time-dependent signal the distances $\Delta x_{2,n}$ characterizing the relative positions of all adjacently arranged barcode elements 9, as if they were projected onto the xz-plane, which is arranged between the barcode scanner 2 and the non-planar barcode 8. In order to calculate the distances $\Delta x_{2,n}$ according to eq. 4, the radius R of the object is required.

The radius R of the cylindrical surface 16 of the object 15 is *per se* unknown. The correcting unit 3 is configured to select a first starting value for a radius of curvature R of a virtual cylinder which approximates the surface 16 that the non-planar barcode 8 is attached to, and, using the first starting value, to calculate the variance of differences of the determined distances $\Delta x_{2,n}$ between adjacently arranged barcode elements 9 to integer multiples of the given smallest width d. The variance may be calculated as the sum of squared differences or as the sum of absolute values of the differences, or any other variation calculus that appears suitable to the one skilled in the art.

As the start region 12 and the end region 14 comprise two barcode elements 9 designed as bars 10 that are arranged separated by a distance of the given smallest width d, the distance that is determined from eq. 4 for the start region and/or end region barcode elements 9 can be scaled up by a scaling factor to be equal to the actual value, and the same scaling factor is then also applied to the other determined differences $\Delta x_{2,n}$.

The calculation of the variance of differences of the determined distances $\Delta x_{2,n}$ between adjacently arranged barcode elements 9 to integer multiples of the given smallest width d is then repeated for different radii of curvature R until the variance is at least close to a minimum. Mathematical methods regarding a selection of a step width between consecutively selected radii of curvature R for optimizing the search for a minimum of the variance are well-known to the one skilled in the art and therefore need not be discussed herein.

Finally, the correcting unit 3 is configured for obtaining a correction factor by using the radius of curvature R that yielded a variance at least close to the minimum and for correcting the determined distances $\Delta x_{2,n}$ by applying the correction factor at them.

While the invention has been illustrated and described in detail in the drawings and foregoing description, such illustration and description are to be considered illustrative or exemplary and not restrictive; the invention is not limited to the disclosed embodiments.

Furthermore, all examples recited herein are principally intended expressly only to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Other variations to be disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

REFERENCE SYMBOL LIST

| | | | |
|---|---|---|---|
| 1 | barcode scanning device | 9 | center angle |
| 2 | barcode scanner | $\Delta x$ | distance |
| 3 | correcting unit | | |
| 4 | triangulation device | | |
| 5 | software module | | |
| 6 | memory unit | | |
| 7 | processing unit | | |
| 8 | barcode | | |
| 9 | barcode element | | |
| 10 | bar | | |
| 11 | space | | |
| 12 | start region | | |
| 13 | middle region | | |
| 14 | end region | | |
| 15 | object | | |
| 16 | surface | | |
| B | position | | |
| d | given smallest width | | |
| $P_1$ | edge point | | |
| $P_2$ | edge point | | |
| R | object radius | | |
| R | radius of curvature | | |
| $\alpha$ | viewing angle | | |

(continued)

β    viewing angle

**Claims**

1.  A barcode scanning device (1) for decoding a one-dimensional non-planar barcode (8) having a plurality of barcode elements (9) that are adjacently arranged to form a pattern and that each have a width which is an integer multiple of a given smallest width (d), and wherein at least two of the barcode elements (9) are arranged separated by a distance of the given smallest width (d), the barcode scanning device (1) comprising:

    a barcode scanner (2) configured for generating a time-dependent signal corresponding to the pattern of the barcode (8) by scanning the barcode (8); and
    a correcting unit (3) that is configured
    for determining from the time-dependent signal at least one geometrical parameter each characterizing relative positions of adjacent barcode elements (9) as if projected onto a virtual plane that is arranged between the barcode scanner (2) and the non-planar barcode (8);
    for determining a radius of curvature (R) of a virtual cylinder which approximates a surface (16) that the non-planar barcode (8) is attached to from the determined geometrical parameters between adjacent barcode elements (9) by finding a radius of curvature (R) for which a variance of differences of the determined geometrical parameters between adjacently arranged barcode elements (9) to integer multiples of a smallest variation of the geometrical parameter is at least close to a minimum; and
    for correcting the determined geometrical parameters by a correction factor corresponding to the smallest variation of the geometrical parameter and obtained by using the determined radius of curvature (R) and a portion of the time-dependent signal.

2.  The barcode scanning device (1) as claimed in claim 1, wherein the determined geometrical parameters are distances (Δx) along a straight line.

3.  The barcode scanning device (1) as claimed in claim 1, wherein the determined geometrical parameters are viewing angles (α, P) at which adjacent barcode elements (9) appear when viewed from a barcode scanner position (B).

4.  The barcode scanning device (1) as claimed in one of the preceding claims, further comprising a triangulation device (4) that is configured for determining a relative position between the barcode scanner (2) and the barcode (8).

5.  A method for decoding a one-dimensional non-planar barcode (8) with a barcode scanning device (1) comprising a barcode scanner (2), the non-planar barcode (8) having a plurality of barcode elements (9) that are adjacently arranged to form a pattern and that each have a width which is an integer multiple of a given smallest width (d), wherein at least two of the barcode elements (9) are arranged separated by a distance of the given smallest width (d), the method comprising steps of:

    - acquiring a time-dependent signal corresponding to the pattern of the barcode (8) by scanning the barcode (8) with the barcode scanner (2);
    - from the time-dependent signal, determining at least one geometrical parameter each for characterizing relative positions of adjacent barcode elements (9) as if projected onto a virtual plane that is arranged between the barcode scanner (2) and the non-planar barcode (8);
    - determining a radius of curvature (R) of a virtual cylinder which approximates a surface (16) that the non-planar barcode (8) is attached to from the determined geometrical parameters between adjacent barcode elements (9) by finding a radius of curvature (R) for which a variance of differences of the determined geometrical parameters between adjacent barcode elements (9) to integer multiples of a smallest variation of the geometrical parameter is at least close to a minimum;
    - using the determined radius of curvature (R) and a portion of the time-dependent signal to obtain a correction factor corresponding to the smallest variation of the geometrical parameter for correcting the determined geometrical parameters.

6.  The method as claimed in claim 5, further comprising a step of

- determining a relative position (B) between the barcode scanner (2) and the barcode (8) with a triangulation device (4).

7. A software module (5) provided to carry out the method as claimed in claim 5 or 6, wherein the method is converted into a program code that is implementable in and executable by a correcting unit (3) of a barcode scanning device (1), and that is provided to control a barcode scanning device (1) by carrying out the method.

**Patentansprüche**

1. Barcode-Scannervorrichtung, (1) zum Entschlüsseln eines eindimensionalen nicht planaren Barcodes (8) mit einer Vielzahl an Barcode-Elementen (9), die angrenzend angeordnet sind, um ein Muster zu formen und die je eine Breite haben, die ein ganzzahliges Vielfaches einer festgelegten kleinsten Breite (d) ist, wobei mindestens zwei der Barcode-Elemente (9) separat durch eine Entfernung der festgelegten kleinsten Breite (d) angeordnet sind, wobei die Barcode-Scannervorrichtung (1) umfasst:

einen Barcode-Scanner (2), der konfiguriert wurde, um ein zeitabhängiges Signal zu erzeugen, welches dem Muster des Barcodes (8) entspricht, indem der Barcode (8) gescannt wird; und
eine Korrektureinheit (3), die konfiguriert wurde,
um aus dem zeitabhängigen Signal mindestens einen geometrischen Parameter zu erfassen, der jeweils relative Positionen von angrenzenden Barcode-Elementen (9) kennzeichnet, als ob sie auf eine virtuelle Ebene projiziert werden, die zwischen dem Barcode-Scanner (2) und dem nicht planaren Barcode (8) angeordnet ist;
um einen Krümmungsradius (R) eines virtuellen Zylinders festzulegen, der an eine Oberfläche (16) heranreicht, an die der nicht planare Barcode (8) von den geometrisch festgelegten Parametern zwischen den angrenzenden Barcode-Elementen (9) durch den Krümmungsradius (R̃) befestigt ist, bei dem eine Abweichung von Differenzen der festgelegten geometrischen Parameter zwischen den angrenzend angeordneten Barcode-Elementen (9) zu einer ganzzahligen Vielzahl der kleinsten Veränderung zu geometrischen Parametern mindestens dicht an einem Minimum ist; und
um die geometrisch festgelegten Parameter durch einen Korrekturfaktor gemäß der kleinsten Abweichung des geometrischen Parameters zu korrigieren, der durch die Berücksichtigung des Krümmungsradius (R) und teilweise durch das zeitabhängige Signal erfasst wird.

2. Barcode-Scannervorrichtung (1) nach Anspruch 1, wobei es sich bei den geometrisch festgelegten Parametern um Entfernungen ($\Delta$x) entlang einer geraden Linie handelt.

3. Barcode-Scannervorrichtung (1) nach Anspruch 1, wobei es sich bei den geometrisch festgelegten Parametern um Betrachtungswinkel ($\alpha,\beta$) handelt, an denen sich die angrenzenden Barcode-Elemente (9) befinden, wenn man sie von der Position des Barcode-Scanners (B) aus betrachtet.

4. Barcode-Scannervorrichtung (1) nach einem der vorstehenden Ansprüche, weiterhin umfassend ein Triangulationsgerät (4), welches konfiguriert ist, um eine relative Position zwischen dem Barcode-Scanner (2) und dem Barcode (8) festzulegen.

5. Verfahren zum Entschlüsseln eines eindimensionalen nicht planaren Barcodes (8) mit einer Barcode-Scannervorrichtung (1), einen Barcode-Scanner (2) umfassend, wobei der nicht planare Barcode (8) eine Vielzahl von Barcode-Elementen (9) besitzt, die angrenzend angeordnet sind, um ein Muster zu formen und die jeweils eine Breite haben, die ein ganzzahliges Vielfaches einer festgelegten kleinsten Breite (d) ist, wobei mindestens zwei der Barcode-Elemente (9) separat durch eine Entfernung der festgelegten kleinsten Breite (d) angeordnet sind, wobei das Verfahren die folgenden Schritte umfasst:

- Erhalten eines zeitabhängiges Signals, welches dem Muster des Barcodes (8) entspricht, indem der Barcode (8) mit dem Barcode-Scanner gescannt wird (2);
- durch das zeitabhängige Signal Bestimmen mindestens eines geometrischen Parameters, jeweils um relative Positionen der angrenzenden Barcode-Elemente (9) zu kennzeichnen, als ob sie auf eine virtuelle Ebene projiziert werden, die zwischen dem Barcode-Scanner (2) und dem nicht planaren Barcode (8) angeordnet ist;
- Bestimmen eines Krümmungsradius (R̃) eines virtuellen Zylinders, der an eine Oberfläche (16) heranreicht, an die der nicht planare Barcode (8) befestigt ist, von den geometrisch festgelegten Parametern zwischen den angrenzenden Barcode-Elementen (9) durch den Krümmungsradius (R̃), bei dem eine Abweichung von Differenzen der festgelegten geometrischen Parameter zu einer ganzzahligen Vielzahl der kleinsten Veränderung zu geometrischen Parametern mindestens dicht an einem Minimum ist;
- Verwenden des festgelegten Krümmungsradius (R) und eines Teils des zeitabhängigen Signals, um einen Korrekturfaktor gemäß der kleinsten Abweichung des geometrischen Parameters zu erhalten, um die festgelegten geometrischen Parameter zu korrigieren.

6. Verfahren nach Anspruch 5, weiterhin umfassend den folgenden Schritt umfassend,

- Bestimmen einer relativen Position (B) zwischen dem Barcode-Scanner (2) und dem Barcode (4) mit einem Triangulationsgerät.

7. Ein Softwaremodul (5) wird bereitgestellt, um das Verfahren nach Anspruch 5 oder 6 durchzuführen, wobei das Verfahren in einen Programmcode konvertiert wird, der durch eine Korrektureinheit (3) des Barcode-Scanners (1) praktisch anwendbar und ausführbar ist und der bereitgestellt wird, um eine Barcode-Scannervorrichtung (1) zu steuern, indem das Verfahren befolgt wird.

**Revendications**

1. Dispositif de lecture de codes-barres (1) pour décoder un code-barres non plan unidimensionnel (8) présentant une pluralité d'éléments de codes-barres (9) qui sont agencés de manière adjacente pour former un motif et qui présentent chacun une largeur qui est un multiple entier d'une largeur minimum donnée (d), et dans lequel au moins deux des éléments de codes-barres (9) sont agencés séparément selon une distance de la largeur minimum donnée (d), le dispositif de lecture de codes-barres (1) comprenant :

un lecteur de codes-barres (2) configuré pour générer un signal dépendant du temps correspondant au motif du code-barres (8) en lisant le code-barres (8) ; et
une unité de correction (3) qui est configurée
pour déterminer à partir du signal dépendant du temps au moins un paramètre géométrique caractérisant chacun des positions relatives d'éléments de codes-barres (9) adjacents comme s'ils étaient projetés sur un plan virtuel qui est agencé entre le lecteur de codes-barres (2) et le code-barres non plan (8) ;
pour déterminer un rayon de courbure (R) d'un cylindre virtuel qui se rapproche d'une surface (16) à laquelle le code-barres non plan (8) est rattaché à partir des paramètres géométriques déterminés entre des éléments de codes-barres (9) adjacents en trouvant un rayon de courbure (R) pour lequel une variation de différences des paramètres géométriques déterminés entre des éléments de codes-barres (9) agencés de manière adjacente par rapport à des multiples entiers d'une variation minimum du paramètre géométrique est au moins proche d'une valeur minimum ; et
pour corriger les paramètres géométriques déterminés par un facteur de correction correspondant à la variation minimum du paramètre géométrique et obtenu en utilisant le rayon de courbure (R̃) déterminé et une partie du signal dépendant du temps.

2. Dispositif de lecture de codes-barres (1) selon la revendication 1, dans lequel les paramètres géométriques déterminés sont des distances (Δx) le long d'une ligne droite.

3. Dispositif de lecture de codes-barres (1) selon la revendication 1, dans lequel les paramètres géométriques déterminés sont des angles de visualisation (α, β) auxquels des éléments de codes-barres (9) adjacents apparaissent lorsqu'on les visualise depuis une position de lecture de codes-barres (B).

4. Dispositif de lecture de codes-barres (1) selon l'une quelconque des revendications précédentes, comprenant en outre un dispositif de triangulation (4) qui est configuré pour déterminer une position relative entre le lecteur de codes-barres (2) et le code-barres (8).

5. Procédé pour décoder un code-barres non plan unidimensionnel (8) avec un dispositif de lecture de codes-barres (1) comprenant un lecteur de codes-barres (2), le code-barres non plan (8) présentant une pluralité d'éléments de codes-barres (9) qui sont agencés de manière adjacente pour former un motif et qui présentent chacun une largeur qui est un multiple entier d'une largeur minimum donnée (d), dans lequel au moins deux des éléments de codes-barres (9) sont agencés séparément selon une distance de la largeur minimum donnée (d), le procédé comprenant les étapes suivantes :

- acquérir un signal dépendant du temps correspondant au motif du code-barres (8) en lisant le code-barres (8) avec le lecteur de codes-barres (2) ;
- à partir du signal dépendant du temps, déterminer au moins un paramètre géométrique chacun pour caractériser des positions relatives d'éléments de codes-barres (9) adjacents comme s'ils étaient projetés sur un plan virtuel qui est agencé entre le lecteur de codes-barres (2) et le code-barres non plan (8) ;
- déterminer un rayon de courbure (R) d'un cylindre virtuel qui se rapproche d'une surface (16) à laquelle le code-barres non plan (8) est rattaché à partir des paramètres géométriques déterminés entre des éléments de codes-barres (9) adjacents en trouvant un rayon de courbure (R) pour lequel une variation de différences des paramètres géométriques déterminés entre des éléments de codes-barres (9) adjacents par rapport à des multiples entiers d'une variation minimum du paramètre géométrique est au moins proche d'une valeur minimum ;
- utiliser le rayon de courbure (R̃) déterminé et une partie du signal dépendant du temps pour obtenir un facteur de correction correspondant à la variation minimum du paramètre géométrique pour corriger les paramètres géométriques déterminés.

6. Procédé selon la revendication 5, comprenant en outre l'étape suivante

- déterminer une position relative (B) entre le lecteur de codes-barres (2) et le code-barres (8) avec un dispositif de triangulation (4).

7. Module logiciel (5) prévu pour exécuter le procédé selon la revendication 5 ou 6, dans lequel le procédé est converti en un code de programme qui peut être mis en oeuvre et qui peut être exécuté par une unité de correction (3) d'un dispositif de lecture de codes-barres (1), et qui est prévu pour commander un dispositif de lecture de codes-barres (1) en exécutant le procédé.

FIG. 1

FIG. 2